# EUROPEAN PATENT APPLICATION

(11) **EP 1 443 740 A1**
(43) Date of publication of application: **04.08.2004**
(21) Application number: 03257955.9
(22) Date of filing: 17.12.2003
(51) Int. Cl.: H04M 3/487

(54) **Caller identification-based information services**

(30) Priority: 30.01.2003 US 356169
(71) Applicant: Hewlett-Packard Development Company, L.P., Houston, TX 77070 (US)
(72) Inventor: Bedner, Ilja, Palo Alto CA 94306 (US)
(74) Representative: Exell, Jonathan Mark

(57) **Abstract**

A communication system (10) comprises a first customer communications device (30), a second customer communications device (30), a communication address service provider (16), and a vendor (14). The communication address service provider (16) is configured for providing an indexed array (20) of a caller identification (193) associated with the first customer communications device (30) and the caller identification (193) associated with at least one return communication address (194) of the second customer communications device (30). The vendor (14) is configured for sending a message to the second customer communications device (30) at the at least one return communication address (194) in response to a telephone call to the vendor (14) initiated by the first customer communications device (30).

A method of the present invention for communication with a customer (12) comprises receiving a consumer-initiated telephone call and capturing a caller identification (193) of the consumer during the telephone call. The method further comprises sending, in response to the consumer-initiated telephone call, a target message (62) from the vendor (14) to the customer (12) using a return communication address (194) associated with the caller identification (193), with the return communication address (194) being different than a caller identification telephone number (193) through which the consumer-initiated telephone call was made, and with the target message (62) including content responsive to the telephone call.

## Description

### The Field of the Invention

The present invention generally relates to communication systems, and in particular to communication systems and methods based on caller identification.

### Background of the Invention

Interpersonal communication systems have changed drastically in the last 20 years. Our society has moved from land-line phones to cordless phones, wireless phones, wireless internet communications, wireless short-range communications, and beyond. With these technological wonders, we have new ways of identifying people and their communication devices.

It is now not uncommon for a person to have a home telephone number, a personal fax number, an electronic mail address, and a wireless telephone number. In addition, personal and business web sites are common. Each of these identification schemes is associated with at least one of a myriad of electronic devices, such as wireless telephones, personal digital assistants, personal computers, pagers, fax machines, etc. Accordingly, there are many new ways to reach people using a variety of communication devices.

Unfortunately, despite having all these communication options, many types and formats of data suited for an interpersonal communication do not get transmitted or received. Moreover, commercial entities are only just beginning

to reach the bulk their customers using these new communication mediums.

### Summary of the Invention

Embodiments of the present invention provide a communication system and method. In one embodiment, the communication system of the present invention comprises a first customer communications device, a second customer communications device, a communication address service provider, and a vendor. The communication address service provider is configured for providing an indexed array of a caller identification associated with the first customer communications device and the caller identification associated with at least one return communication address of the second customer communications device. The vendor is configured for sending a message to the second customer communications device at the at least one return communication address in response to a telephone call to the vendor initiated by the first customer communications device.

### Brief Description of the Drawings

Embodiments of the invention are better understood with reference to the following drawings. The elements of the drawings are not necessarily to scale relative to each other. Like reference numerals designate corresponding similar parts.

Figure 1 is a diagram of a caller-identification-based communication system, according to an embodiment of the present invention.

Figure 2 is flow diagram of a method of responding to a phone call using caller identification services, according to an embodiment of the present invention.

Figure 3 is a block diagram of caller-identification communication system, according to an embodiment of the present invention.

Figure 4 is a block diagram of a response monitor, according to an embodiment of the present invention.

### Description of the Preferred Embodiments

Components of the present invention may be implemented in hardware via a microprocessor, programmable logic, or state machine, in firmware, or in software within a given device. In one aspect, at least a portion of the software programming is web-based and written in HTML and JAVA programming languages, including links to graphical user interfaces, such as via windows-based operating system. The components may communicate via a network using a communication bus protocol. For example, the present invention may or may not use a TCP/IP protocol suite for data transport. Other programming languages and communication bus protocols suitable for use with the present invention will become apparent to those skilled in the art after reading the present application. Components of the present invention may reside in software on one or more computer-readable media. The term computer-readable media as used herein is defined to include any kind of memory, volatile or non-volatile, such as floppy disks, hard disks, CD-ROMs, flash memory, read-only memory (ROM), and random access memory (RAM).

Preferably, the user interfaces, such as a web browser, described herein run on a controller, computer, appliance or other device having an operating system which can support one or more applications. The operating system is stored in memory and executes on a processor. The operating system is preferably a multi-tasking operating system which allows simultaneous execution of multiple applications, although aspects of this invention may be implemented using a single-tasking operating system. The operating system employs a graphical user interface windowing environment which presents the applications or documents in specially delineated areas of the display screen called "windows." The operating system preferably includes a windows-based dynamic display which allows for the entry or selection of data in dynamic data field locations via an input device such as a keyboard and/or mouse. One preferred operating system is a Windows® brand operating system sold by Microsoft Corporation. However, other operating systems which provide windowing environments may be employed, such as LINUX, UNIX, as well as those available from Apple Corporation or IBM. In another embodiment, the operating system does not employ a windowing environment.

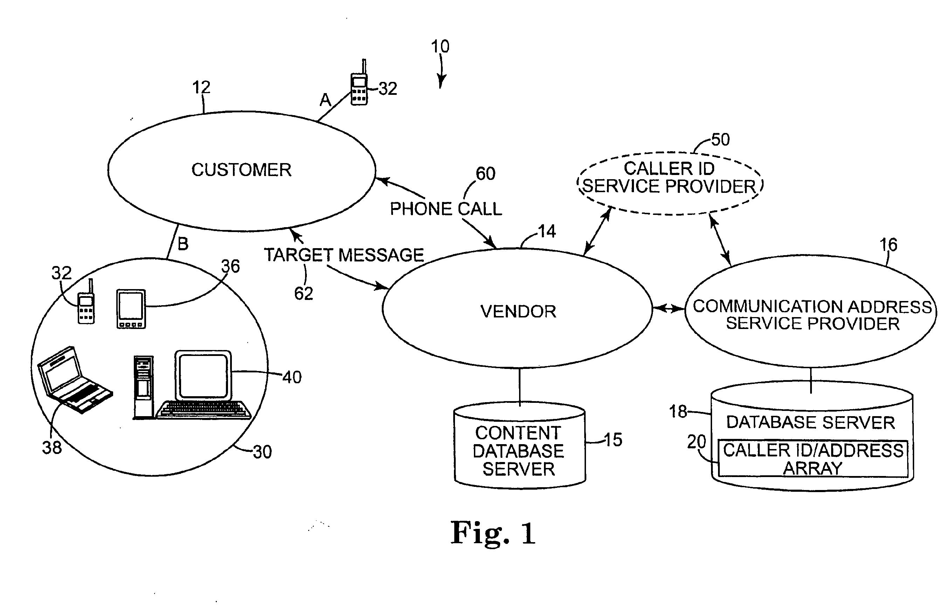

As shown in Figure 1, vendor-customer communication system 10 includes customer 12, vendor 14, communication address service provider 16, and optional caller identification (ID) service provider 50. Customer communication device(s) 30, including any one of, or all of, phone 32, personal digital assistant 36, notebook computer 38, and desktop computer 40, and are associated with customer 12. These devices optionally act in cooperation with each other or are combined. For example, cell phone 32 optionally is incorporated into personal digital assistant 36, or vice-versa. While phone 32 is includes a wireless phone, phone 32 optionally is a land-line phone (either cordless or standard).

Customer 12 includes a consumer seeking goods, services, and/or information from a commercial entity (private and/or public) through the use of any one or all of its communication devices 30, particularly, phone 32.

Vendor 14 includes a service provider of goods, services, and/or information for a consumer. Content database server 15 comprises a database of content controlled by, or accessible to, vendor 14 for use in providing its services, goods, and/or information. Content database server 15 optionally includes a customer relation management component for tracking customer preferences for content.

Communication address service provider 16 comprises database server 18 including array 20 of caller identification data and return communication addresses. Caller identification data includes a name and telephone number so that a caller identification of customer 12 includes one or both of the name and telephone number of customer 12. A return communication address includes an alternate communication address for communicating with the entity identified in the caller identification data. A return communication address comprises an electronic mail address, Short Message Service (SMS) address, and/or uniform resource locator (URL), or other communication mediums, for communicating with one of the customer communication device(s) 30.

Caller identification service provider 50 is incorporated into all, or part of, vendor 14 and/or incorporated into all, or part of, communication address service provider 16. However, caller identification service provider 50 optionally is independent from, and acts in cooperation with, vendor 14 and/or communication address service provider 16. Caller identification service provider 50 is configured to provide a name, and other optional identifying information, in association with a telephone number so that upon receipt of a telephone call, the receiving party can capture and determine the identity (e.g., name, telephone number, name of business) that initiated the phone call to the receiving party.

As shown in Figure 1, customer 12 contacts vendor 14 through a phone call 60 using device A (e.g., a first customer communication device), such as phone 32. In response to the telephone communication between customer 12 and vendor 14, vendor 14 identifies customer 12 using caller identification services from caller identification service provider 50. Vendor 14 then obtains a return communication address of customer 12 from communication address service provider 16. Vendor 14 then sends vendor-related content in target message 62 to customer 12 at device B (i.e., a second customer communication device), such as one or more of customer communication devices 30. This target message 62 optionally is sent during phone call 60 to maximize the impact on customer 12, effectively providing real time marketing, sales, and service from vendor 14 to customer 12. The mechanics of the return communication of target message 62 are transparent to customer 12, allowing the vendor and customer to focus on the substance of phone call. Target message 62 also can be transmitted after phone call 60, as appropriate.

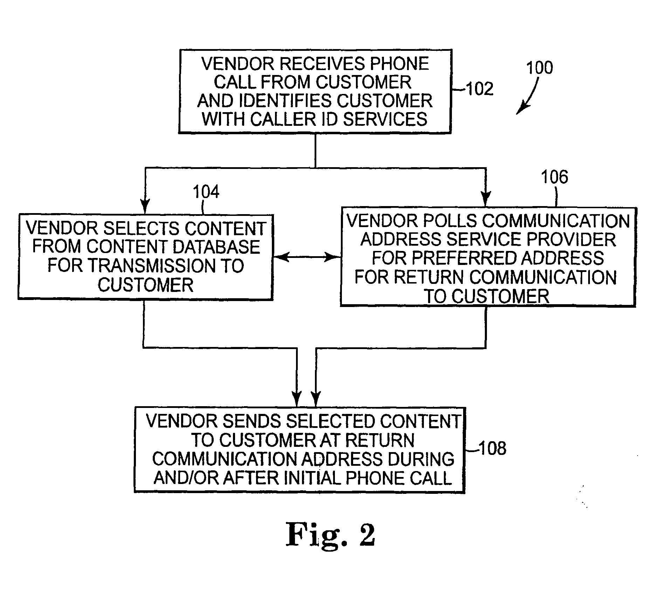

A method 100, according to an embodiment of the present invention, of responding to a customer-initiated telephone call to vendor 14 is described more fully in association with Figure 2. As shown in Figure 2, at 102, vendor 14 receives phone call 60 from customer 12 and identifies customer 12 using caller identification services by determining a phone number and a name of customer 12. At 104, vendor 14 selects content from content database server 15 for transmission to customer. At the same time, vendor 14 polls communication address service provider 16 for a preferred communication address (e.g., a communication address for one of the communication devices 30) to permit vendor 14 to make a return communication (i.e., target message 62) to customer 12.

Block 106 optionally is performed before block 104 so that once a return communication address is recommended by communication address service provider 16, then content is selected from content database server 15 that best suits the type and/or format of the identified return communication address (e.g., electronic mail address, SMS address, uniform resource locator). Alternatively, block 106 is performed after block 104 so that after vendor 14 selects content from content database server 15, a type and/or format of return communication address that suits the selected content is identified and recommended by communication address service provider 16. Moreover, 104 and 106 can be performed substantially at the same time, independent of one another, or interdependently with each other. Finally, whether block 104 is performed before or after block 106, each of block 104 and block 106 optionally are performed completely independent of each other.

Next, at 108, vendor 14 sends the selected content to customer 14 at the return communication address during and/or after the initial telephone call between vendor 14 and customer 12.

Accordingly, vendor 14 dynamically responds to a telephone inquiry from customer 12 with target message 62 (e.g., text message, web page, etc.) using a communication address for one of the communication devices 30 other than the customer's telephone number (obtained through caller identification) to provide customer 12 with an incentive to purchase or consume goods, services and/or information offered by vendor 14.

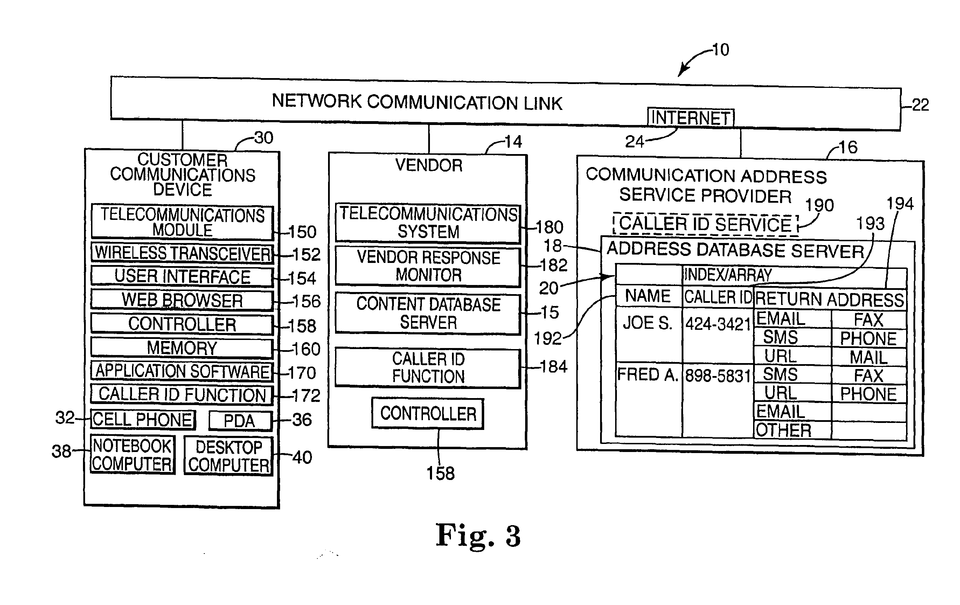

Vendor-customer communication system 10 (see Fig. 1) is illustrated in greater detail in block diagram of Figure 3. As shown in Figure 3, customer communications device(s) 30 includes any one or all of cell phone 32, personal digital assistant 36, notebook computer 38 and desktop computer 40. Customer communications device 30 corresponds to device B (e.g., a second communication device) in Figure 1, which is designated for receiving target message 62 from vendor 14 in response to customer-initiated phone call 60 to vendor 14.

Customer communication device(s) 30 each include any one or all of the following hardware, software, firmware, and/or functions: telecommunication module 150; wireless transceiver 152; user interface 154; web browser 156; controller 158; memory 160; application software 170; and caller identification function 172. Telecommunication module 150 comprises a telecommunication hardware and software, as known in the art, to permit telephone calls with device 30.

Wireless transceiver 152 of communications device 30 enables wireless communication between customer communications device 30 and vendor 14 via network communication link 22. Network communication link 22, as used herein, includes an Internet communication link 24, an intranet communication link, or similar high-speed communication link, as well as telecommunications links including public switched telephone network and wireless telephone networks.

Wireless transceiver 152 of customer communications device 30 also optionally enables short range wireless communication between customer communication device(s) 30 and vendor 14 using other known communication protocols such as Wireless Application Protocol (WAP), Bluetooth, Infrared (IrDA, FIR), 802.11, and UltraWideBand (UWB).

User interface 154 comprises a graphical user interface with a keypad and/or pointing devices for entering dialing telephone numbers, entering email addresses, etc., as well as a display for displaying functions of device 30.

Controller 158, in cooperation with user interface 154, supports and coordinates interaction of any one, or all, of components identified for incorporation into customer communications device 30. Controller 158 includes hardware, software, firmware or combination of these. In one preferred embodiment, controller 158 includes a microprocessor-based system capable of performing a sequence and logic operation and including memory for storing information. Memory 160 operates in cooperation with controller for storing and retrieving data for operation of customer communication devices 30.

Application software 170 comprises one or more application software programs such as a word processor, calendar, spreadsheet, financial transaction package, etc for operating on customer communication devices 30 and for handling content in target message 62 from vendor 14.

Caller identification function 172 comprises caller identification capability for customer 12 and is provided through a caller identification service, such as from an independent caller ID service provider 50 (see Fig. 1).

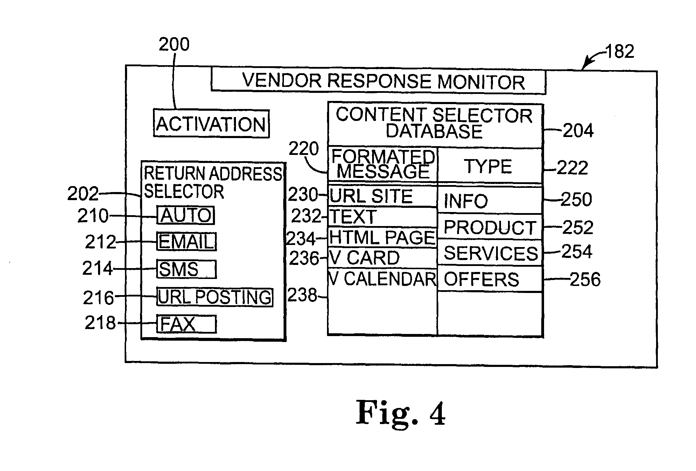

As further shown in Figure 3, vendor 14 includes telecommunications system 180, vendor response monitor 182, content database server 15, and caller identification (ID) function 184. Telecommunication system 180 is a telephone network or bank for telecommunicating with one or more customers 12 at their customer communication devices 30. Vendor response monitor 182 enables vendor 14 to select content form content database server 15 and facilitates interaction with communication address service provider 16 for identifying and selecting a format and/or type of content to be sent to customer 12. Customer response monitor 182 is later described in greater detail in association with Figure 4.

Content database server 15 contains an array of information in the form of data (e.g., weather forecast), product offers/advertisements, description of services, product information (e.g., instruction manuals), service information (e.g., warranty information). Content database server 15 is maintained by vendor 14 or optionally maintained, in whole or part, by a third party for access by vendor 14.

Caller identification function 184 comprises caller identification capability for vendor 14 and is provided by vendor 14 through incorporation of caller ID service provider 50 (see Fig. 1) or through access to independent caller ID service provider 50.

Controller 158 supports any one of, or all of, components of vendor 14 including telecommunications system 180, customer response monitor 182, content database server 15, and caller ID function 184.

As further shown in Figure 3, communication address service provider 16 comprises communication address database server 18 and optional caller ID services 190 (e.g. provided through caller ID service provider 50). Communication address database server 18 includes indexed array 20 of caller identification date and return communication addresses. Indexed array 20 comprises a set of names 192, a set of caller identifiers 193 (e.g., telephone number), and a set of return communication addresses 194 (e.g., electronic mail, Short Message Service (SMS) address, uniform resource locator (URL), fax number, etc.). Each name 192 is uniquely associated with a caller identifier 193 (e.g. phone number) and uniquely associated with one or more return communication addresses 194. As previously described, caller identification data provided about customer 12 includes name 192 and/or a phone number as caller identification 193. Accordingly, caller identifier 193 refers to one or both of name 192 and a phone number listed under caller identifier 193. Each return communication addresses 194 also uniquely corresponds to one or more specific customer communication device 30.

Address database server 18 is created and maintained, using techniques known to those skilled in the art, by a service provider independent of vendor 14, or optionally by vendor 14. For example, address database server 18, in cooperation with caller ID services (e.g., caller ID service provider 50) is created and maintained using techniques such as those disclosed in U.S. Patent 6,298,128 to Ramey et al, U.S. Patent 5,239,577 to Bates et al, and/or U.S. Patent 6,005,928, all of which are hereby incorporated by reference, and as disclosed in other art known to those skilled in the art.

Accordingly, vendor-customer communication system 10 as described and illustrated in Figure 3 is equipped to carry out method 100. For example, after phone call 60 is initiated by customer 12, vendor 14 identifies the caller with caller identification function 184 and responds with target message 62 directed at personal digital assistant 36 of customer 12 (during phone call 60) using a return communication address (e.g., electronic mail address of customer 12) obtained from return communication address server 16. Alternatively, vendor 14 responds to phone call 60 by sending a product offer through SMS message to phone 32 of customer 12, using SMS address of customer 12 obtained from return communication address server 16.

As shown in Figure 4, vendor response monitor 182 comprises activation function 200, return communication address selector 202, and content selector database 204. Return communication address selector 202 includes auto selector 210, electronic mail (email) function 212, Short Message Service (SMS) function 214, uniform resource locator (URL) posting 216, and fax function 218.

Content selector database 204 comprises a database of selectable formatted message(s) 220 and type(s) 222 of content for target message 62 from vendor 14 to customer 12. Formatted message selector 220 comprises selection of delivering target message as uniform resource locator 230 (URL) for a web site, text message 232, Hypertext Markup Language (HTML) page 234, vCard 236, and vCalendar 238. Content of target message 62 is comprised of substantive data as well as the format of the message. For example, uniform resource locator 230 for a web site is both a format of target message and the content of the message. Type selector 222 of target message 62 comprises information 250, products 252, services 254, and offers 256 that from the substantive data appearing in one of the formatted messages 220.

Auto selector 210 of return address selector 202 permits automatic selection by controller 158 of the most suitable address function for sending target message 62 to customer among email function 212, SMS function 214, and/or URL posting function 216. Email function 212 causes an electronic mail address to be designated as the return communication address for sending a target message to customer 12. This function is suitable for use with any device supporting web browser 156 of customer communication device 30 (see Fig. 3), such as cell phone 32, PDA 36, notebook computer 38, and/or desktop computer 40. SMS function 214 causes a short message through a Short Messaging Service to be designated as the selected return communication address and is suitable for use with devices 30 supporting the SMS protocol such as cell phone 32 and/or PDA 36. Likewise, URL posting function 216 causes target message 62 (e.g., data) to be posted to a web site, identified by a uniform resource locator address, such a personal web site of customer 12 or a web site frequented by customer 12. Customer communication devices 30 including web browser 156 can retrieve this data.

Content selector database 204 facilitates creating and/or selecting the content of the target message. For example, content could simply be recommending to the customer 12 a uniform resource locator to a web site 230, that may or may not be associated with vendor 14. Text message 232 includes text describing almost anything including all four types of content: information 250, products 252, services 254 and offers 256. HTML page 234 comprises a web page that is sent directly to customer 12 so that customer 12 can immediately browse HTML page 234 with web browser 156 of customer communications device 30, or view HTML page through a word editor.

vCard 236 comprises an electronic business card, created according to the protocols and standards developed by the Internet Mail Consortium, or a similar data format developed by vendor 14. For example, vCard 236 carries data about a person or company, including name, address, phone numbers, etc, that would normally be found on a conventional business card. Likewise, vCalendar 238 is created, according to the protocols and standards developed by the Internet Mail Consortium (or optionally by vendor 14), and carries scheduling information for an event or appointment that is usable by a scheduling application program (running on customer communication device(s) 30), such as Outlook, available from Microsoft Corporation.

Accordingly, in one example, customer 12 calls vendor 14 to request service on an appliance and, after identifying the customer with caller ID services, vendor 14 uses content selector database 204 to select sending a vCalendar message 236 to customer 12. This vCalendar message 236 optionally includes a proposed appointment time and place for an appliance technician to service an appliance owned by customer 12. vCalendar message 236 is sent as target message 62 using return communication address, such as electronic mail, using electronic mail function 212 of return address selector. Customer 12 receives vCalendar 236 with any one of customer communication devices 30 through web browser 156. Vendor 14 sends target message 62 with vCalendar 236 during phone call 60 so that vendor 14 is interactively communicating with customer 12 through more than one communication medium at a time. This arrangement permits vendor 14 to carry out real-time marketing that dynamically and instantly responds to the desires of customer 12. In this example, information about an appointment that is awkward and inconvenient to be verbally described over the phone is instead conveyed in a manner conducive to keeping the appointment by permitting direct calendaring for customer 12 in the same step as phone call 60.

In another example, customer 12 calls a home improvement store and inquires about a kitchen remodeling job. During phone call 60, the home improvement store (as vendor 14) uniquely identifies the customer through caller identification services and then obtains an electronic mail address 212 of the customer from communication address database server 16. The home improvement store then obtains a HTML page 234 (showing kitchen products and services) through vendor response monitor 182. The home improvement store then sends the customer a target message 62 at electronic mail address 212 of customer 12 with HTML page 234 for viewing by the customer during the phone call with the home improvement store. The mechanics of sending the target message all take place transparently to the customer, allowing the home improvement store to be responsive to the needs of the customer in a more convenient and timely manner.

A method and system of the present invention permits responsive communication between a vendor and a customer in multiple mediums, by using caller identification services during a phone call as a catalyst for vendor to send a separate target message to the customer in parallel to the phone call. An indexed array of caller identification data and return communication addresses is maintained or accessed for carrying out this responsive communication from vendor to the customer. Customers receive timely information and offers from vendor, in communication mediums preferred by the customer, and best suited for the content sent by the vendor.

## Claims

1. A communication system (10) comprising:
a first customer communications device (30) and a second customer communications device (30);
a communication address service provider (16) configured for providing an indexed array (20) of a unique caller identification (193) associated with the first customer communications device (30) and the unique caller identification (193) associated with at least one return communication address (194) of the second customer communications device (30); and
a vendor (14) configured for sending a message (62) to the second customer communications device (30) at the at least one return communication address (194) in response to a telephone call (60) to the vendor (14) initiated by the first customer communications device (30).

2. The system of claim 1 wherein the system (10) includes a caller identification service provider (50) configured for provider caller identification of a consumer (12) telephoning the vendor (14).

3. The system of claim 2 wherein the communication address service provider (16) comprises the caller identification service provider (50).

4. The system of claim 1 wherein the message (62) comprises at least one of the following formatted messages (220):
uniform resource locator (230) of a web site;
a text message (232);
a hypertext markup language page (234);
a vCard (236);
and a vCalendar (238).

5. The system of claim 1 wherein the return communication address (194) of the second communication device (30) comprises at least one of:
an uniform resource locator posting (216);
an electronic mail address (212); and
and a short message service address (214).

6. The system of claim 1 wherein the vendor (14) is configured for sending the message (62) during the phone call (60) between the first communications device (30) and the vendor (14).

7. The system (10) of claim 1 wherein the first customer communications device (30) and the second communications devices (30) comprise at least one of:
a telecommunications module (150);
a wireless transceiver (152);
an user interface (154);
a web browser (156);
a controller (158);
a memory (160);
an application software (170);
a caller identification function (172);
a cell phone (32);
a personal digital assistant (36);
a notebook computer (38); and
a desktop computer (40).

8. The system of claim 1 wherein the vendor (14) comprises at least one of:
a telecommunications system (180);
a vendor response monitor (182) comprising:
a return address selector (202) configured for selecting a return communication address (194) including at least one of an electronic mail address (212), a short message service address (214), and a uniform resource locator address (216);
a content selector database (204) configured for selecting a formatted message (220) comprising at least one of an uniform resource locator site address (230), a text message (232), a hypertext markup language page (234), an electronic business card (236), and a electronic calendaring file (238);
a content database server (15); and
a caller identification function (184).

9. A method of communicating with a customer (12) using any one of the systems of claims 1,2,3,4,5,6,7, or 8, the method comprising:
capturing a caller identification (193) associated with a customer (12) during a telephone call (60) between the customer (12) and a vendor (14);
selecting a content for transmission from the vendor (14) to the customer (12);
obtaining a return communication address (194) for a communication medium, from an array (20) of return communication addresses (194) associated with the caller identification (193), with the return communication address (194) being different than a telephone number (193) associated with the caller identification (193); and
sending the content from the vendor (14) to the customer (12) in a target message (62) at the return communication address (194).

10. The method of claim 9 wherein selecting a content includes at least one of:
selecting a type (222) of the content that is based on a formatted message (220) of the obtained return communication address; and
selecting a formatted message (220) of the obtained return communication address that is based on a type (222) of the at least one content; and
wherein the sending the content comprises:
sending the content during the telephone call (60) between the vendor (14) and the customer (12).
